# EUROPÄISCHE PATENTANMELDUNG

(11) **EP 1 020 793 A2**
(43) Veröffentlichungstag der Anmeldung: **19.07.2000**
(21) Anmeldenummer: 99440356.6
(22) Anmeldetag: 10.12.1999
(51) Int. Cl.: G06F 9/00

(54) **Verfahren, System, Rechner und Vermittlungsstelle zum Betreiben eines Rechners**

(30) Priorität: 10.12.1998 DE 19856975
(71) Anmelder: ALCATEL, 75008 Paris (FR)
(72) Erfinder: Custers, Stefan, 2260 Westerlo (BE); Kunkel, Rolf, 71691 Freiberg (DE); Legat, Karl-Heinz, 71272 Renningen (DE)
(74) Vertreter: Brose, Gerhard, Dipl.-Ing.

(57) **Zusammenfassung**

Die vorliegende Erfindung betrifft ein Verfahren zum Betreiben eines Rechners (SER) sowie ein System, einen Rechner und eine Vermittlungsstelle.
Bei dem Verfahren verwaltet ein Basis-Betriebssystem (BOS) Betriebsmittel (HW) des Rechners. Ferner wird zumindest eine Anwendungsprogrammgruppe (A11,A12) mit mindestens einem Anwendungsprogramm (A11) mit Hilfe der Betriebsmittel des Rechners ausgeführt. Dazu wird vorgeschlagen, daß unter der Verwaltung des Basis-Betriebsystemes mindestens ein Aufsatz-Multitasking-Betriebsystem (AOS1) arbeitet, das die in der (ersten) Anwendungsprogrammgruppe enthaltenen Anwendungsprogramme betreibt.

## Beschreibung

Die vorliegende Erfindung betrifft ein Verfahren zum Betreiben eines Rechners gemäß dem Oberbegriff des Anspruchs 1, sowie ein System gemäß dem Oberbegriff des Anspruchs 9 hierfür, einen Rechner gemäß dem Oberbegriff des Anspruchs 10 und eine Vermittlungsstelle gemäß dem Oberbegriff des Anspruchs 11.

Wie allgemein bekannt werden die Ressourcen verschiedenartiger Rechnersysteme, z.B. Speichermittel und Prozessorkapazität, durch für den jeweiligen Anwendungsfall geeignete Betriebssysteme verwaltet und betrieben. Für Personal Computer wird dazu üblicherweise DOS (Disc Operating System) oder Windows verwendet, für Systeme mit einer höheren Zuverlässigkeit wie z.B. Workstations zumeist eine Variante von UNIX. Auf der Basis solcher Betriebssysteme können verschiedene Programmodule in Form sogenannter Tasks oder Prozesse betrieben werden und zwar nacheinander unter sogenannten Single-Task-Betriebssystemen, z.B. DOS, oder parallel unter sogenannten Multitasking-Betriebssystemen, wie z.B. Windows und UNIX. Ein Multitasking-Betriebssystem sorgt beim Betrieb verschiedener Tasks dafür, daß jedem dieser Tasks ein festgelegter Anteil von Ressourcen des Rechnersystemes zukommt, z.B. ein Anteil an Prozessorkapazität oder definierte Bereiche innerhalb der Speichermittel. Wenn bei einem der obengenannten Multitasking-Betriebssysteme eine neue Version eines Programmodules eine bisherige Version ersetzen soll und an den Betrieb des bisherigen Programmodules anknüpfen soll, indem z.B. die von dem bisherigen Programmodul bearbeiteten Daten in den Betrieb des neuen Programmodules übernommen werden sollen, wird zunächst der Betrieb des bisherigen Programmodules beendet und die von diesem bearbeiteten Daten werden gespeichert. Erst dann wird das neue Programmodul gestartet und lädt anschließend die von dem bisherigen Programmodul gespeicherten Daten. Ein On-line Austausch eines Programmodules mit einem Parallelbetrieb von austauschenden und auszutauschendem Programmodul ist bei einem üblichen Multitasking-Betriebssystem nicht vorgesehen.

Für ausfallsichere Rechnersysteme, z.B. für Telekommunikationssysteme mit einer Vielzahl angeschlossener Kommunikationspartner ist ein gleitender, unterbrechungsfreier Funktionsübergang von einem auszutauschenden auf ein dieses ersetzendes Programmodul unerläßlich. Bei solchen Systemen ergibt sich weiterhin das Problem, daß ein Softwareaustausch zumeist nicht nur ein Programmodul betrifft, sondern jeweils eine ganze Gruppe von Programmodulen, die als zusammenwirkende Einheit auftreten. Ein architektonischer Ansatz, diese Problemstellung zu beseitigen, wird in dem Artikel "'Seele des Vermittlungssystems' im Mittelpunkt des Fortschritts", in der Zeitschrift "telecom report 15", Heft 2 aus dem Jahr 1992, der Siemens AG von den Autoren Dr. Harald Eggers und Anthony Maher dargestellt. Dort wird dargestellt, wie auf der Basis eines gemeinsamen Betriebssystemes, mit dem ein Vermittlungssystem betrieben wird, sogenannte "Verarbeitungsplattformen" für jeweils mindestens eine "Kapsel" betrieben werden können. Eine solche Kapsel enthält jeweils mindestens eine sogenannte "Service Provision Unit" (SPU), die für das Vermittlungssystem Dienstleistungen erbringt und aus einer "Mischung aus Prozessen, Daten, Regionen und Prozeduren" besteht. Eine SPU wird als Erweiterung des "heutigen Prozesses" beschrieben. Einer Kapsel, also einer Zusammenstellung von SPUs, wird ein "besonderes Plattform-Budget an Speicher- und Zeitgeberbetriebsmitteln" zugewiesen. Eine Kapsel "kann auf einer neu geschaffenen oder bereits bestehenden Verarbeitungplattform eingebracht werden, ohne den Betrieb zu unterbrechen". Die Verteilung an CPU-Kapazität (CPU = Central Processing Unit) erfolgt nicht auf der Ebene der Kapseln, sondern auf der Ebene der Verarbeitungsplattformen, welche die Kapseln betreiben. Die den Verarbeitungsplattformen zugeteilte CPU-Kapazität wird als sogenannte VCPU (VCPU = Virtual Central Processing Unit) bezeichnet. Durch eine hierarchische Zusammenfassung von Programmodulen zu SPUs und weiter zu sogenannten Kapseln werden zwar Gruppen von - auch online austauschbaren - Programmodulen gebildet und diesen Gruppen in Form der VCPUs definierte Systemressourcen zugeteilt. Der Artikel beschreibt jedoch lediglich eine bekannte monolithische Betriebssystemarchitektur, bei der zwar in Form von sogenannten "Kapseln" funktional zusammengehörende Programmeinheiten, nicht jedoch das Betriebssystem oder Teile des Betriebssystemes austauschbar sind.

Aufgabe der Erfindung ist es, Software auf einem Rechner in solche Einheiten aufgegliedert und auf eine solche Weise zu betreiben, daß die Software-Einheiten effizient austauschbar sind.

Diese Aufgabe wird durch ein Verfahren gemäß der technischen Lehre des Anspruchs 1, sowie ein System gemäß der technischen Lehre des Anspruchs 9, einen Rechner gemäß der technischen Lehre des Anspruchs 10 und eine Vermittlungsstelle gemäß der technischen Lehre des Anspruchs 11 gelöst.

Weitere vorteilhafte Ausgestaltungen der Erfindung sind den abhängigen Ansprüchen und der Beschreibung zu entnehmen.

Der Erfindung liegt hierbei der Gedanke zugrunde, ein System zum Verwalten und Nutzen der Betriebsmittel eines Rechners so auszugestalten, daß ein Basis-Betriebssystem die Betriebsmittel des Rechners verwaltet und daß das Basis-Betriebssystem die Betriebsmittel anteilig nicht unmittelbar einem oder mehreren Anwendungsprogrammen, sondern einem oder mehreren Aufsatz-Multitasking-Betriebsystemen zuteilt, die jeweils mindestens ein Anwendungsprogramm betreiben. Ein Anwendungsprogramm wird also nicht direkt durch ein "monolithisches" Betriebssystem ausgeführt, sondern durch ein Aufsatz-Multitasking-Betriebsystem, das von einem auf essentielle Grundfunktionen reduzierten Basis-Betriebssystem betrieben wird. Dadurch wird es möglich, nicht nur ein Anwendungsprogramm oder eine Anwendungsprogrammgruppe auszutauschen, sondern auch das Aufsatz-Multitasking-Betriebsystem. Damit können auch Betriebssystemfunktionen, die nicht Bestandteil des Basis-Betriebssystems sind, ausgetauscht werden, ohne daß das Basis-Betriebssystem an sich davon berührt wird. Zahlreiche Funktionen von Anwendungsprogrammen, die jeweils von einem Aufsatz-Multitasking-Betriebsystem betrieben werden, müssen nicht aus Gründen der Austauschbarkeit von austauschbaren Anwendungsprogrammen selbst erbracht, sondern können von dem ebenfalls austauschbaren Aufsatz-Multitasking-Betriebsystem erbracht werden.

In einer Ausgestaltung der Erfindung werden ein auszutauschendes und ein dieses ersetzendes Aufsatz-Multitasking-Betriebsystem in eine Übergangsphase von dem Basis-Betriebssystem parallel betrieben, so daß Aufsatz-Multitasking-Betriebsystem-Funktionen sowie Funktionen der jeweiligen Anwendungsprogramme oder Teile davon im laufenden Betrieb, also online, von dem auszutauschenden an das dieses ersetzende Aufsatz-Multitasking-Betriebsystem übergeben werden können. Einem Aufsatz-Multitasking-Betriebsystem wird vorteilhafterweise von dem Basis-Betriebssystem nur ein begrenzter Anteil an den Betriebsmitteln des Rechners zugewiesen. Das Basis-Betriebssystem überwacht dabei streng, daß das Aufsatz-Multitasking-Betriebsystem nur auf seinen begrenzten Anteil an den Betriebsmitteln zugreift. Auf diese Weise kann sichergestellt werden, daß ein Fehler des Aufsatz-Multitasking-Betriebsystemes oder eines von dem Aufsatz-Multitasking-Betriebsystem betriebenen Programmodules sich nur auf den begrenzten Anteil an den Betriebsmitteln auswirkt und gegebenenfalls andere Aufsatz-Multitasking-Betriebsysteme, die von dem Basis-Betriebssystem ebenfalls betrieben werden, von dem Fehler nicht beeinträchtigt werden. Damit sich eine Fehlfunktion nur möglichst wenig auswirkt, überwacht ein Aufsatz-Multitasking-Betriebsystem zusätzlich die korrekte Funktion der von ihm betriebenen Anwendungsprogramme und beendet nötigenfalls ein nicht korrekt arbeitendes Anwendungsprogramm. Zu einer weiteren Verbesserung der Fehlersicherheit kann auch das Basis-Betriebssystem die von ihm betriebenen Aufsatz-Multitasking-Betriebsysteme überwachen und ein Aufsatz-Multitasking-Betriebsystem beenden, bei dem eine Fehlfunktion auftritt. Wenn ein Aufsatz-Multitasking-Betriebsystem wegen einer Fehlfunktion beendet werden muß, kann das Basis-Betriebssystem für eine spätere Fehleranalyse Statusinformationen der von dem beendeten Aufsatz-Multitasking-Betriebsystem benutzten Betriebsmittel festhalten, z.B. einen von dem beendeten Aufsatz-Multitasking-Betriebsystem benutzten Speicherbereich gegen anderweitige Benutzung sichern.

Im folgenden werden die Erfindung und ihre Vorteile anhand eines Ausführungsbeispiels unter Zuhilfenahme der Zeichnungen dargestellt.
- Figur 1: zeigt den erfindungsgemäßen Rechner (SER) zur Ausführung des erfindungsgemäßen Verfahrens aus physikalischer Sicht.
- Figur 2: zeigt den erfindungsgemäßen Rechner (SER) aus Figur 1 aus logischer Sicht.

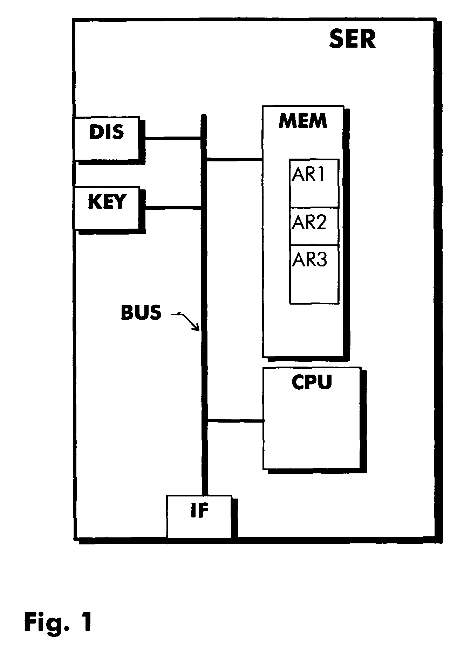

Figur 1 zeigt ein schematisches Beispiel eines Rechners SER zur Ausführung des erfindungsgemäßen Verfahrens. Der Rechner SER ist lediglich in einigen wesentlichen Komponenten dargestellt und kann beispielsweise ein Rechnermodul in einem Telekommunikationssystem sein, z.B. in einer Vermittlungsstelle oder einem Cross-Connect. Der Rechner SER kann aber auch ein Personal Computer oder eine Workstation sein und dabei insbesondere zum Einsatz in einem ausfallsicheren System vorgesehen sein. Der Rechner SER ist dabei z.B. Bestandteil eines Netzwerkmanagementsystemes zur Steuerung eines Telekommunikations- oder Energieverteilungsnetzwerkes. Der Rechner SER enthält ein Steuermittel CPU, z.B. einen oder mehrere Prozessoren, zur Ausführung maschinenlesbarer Befehle. Ferner weist der Rechner SER einen Speicher MEM auf, in dem Programmodule in Form von maschinenlesbaren Befehlssequenzen sowie von Daten, z.B. in Form einer Datenbank gespeichert sind. Der Speicher MEM kann z.B. aus RAM-Bausteinen (Random Access Memory) oder Festplattenspeicher bestehen. Außerdem verfügt der Rechner SER als Eingabemittel über ein Tastenfeld KEY, über das Daten in den Rechner SER eingegeben werden können. Über eine Anzeigevorrichtung DIS kann der Rechner SER Daten ausgeben. Die Anzeigevorrichtung DIS kann z.B. ein Bildschirm oder eine Druckerschnittstelle sein. Über eine Schnittstellenvorrichtung IF kann der Rechner SER Daten sowohl empfangen als auch senden. Dabei wird die Schnittstellenvorrichtung IF über eine Verbindungsleitung mit einem weiteren System verbunden, z.B. mit einem dem Rechner SER ähnlichen Rechner. Das Steuermittel CPU, der Speicher MEM, die Anzeigevorrichtung DIS, das Tastenfeld KEY und die Schnittstellenvorrichtung IF sind an eine Busleitung BUS angeschlossen, über die diese Komponenten Daten miteinander austauschen können. Neben der Busleitung BUS kann der Rechner SER auch weitere, in Figur 1 nicht dargestellte Verbindungen enthalten. Das Steuermittel CPU und der Speicher MEM können z.B. über eine direkte Verbindung miteinander verbunden sein, um schnell Daten austauschen zu können.

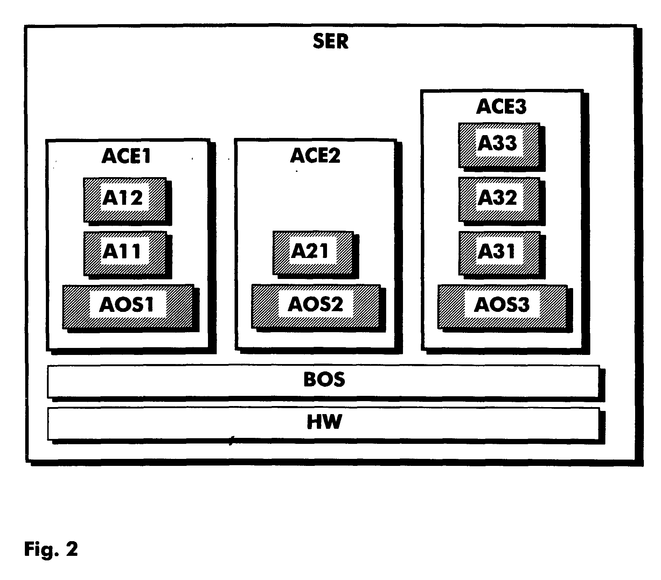

Figur 2 zeigt den Rechner SER aus logischer Sicht, anhand derer im folgenden die Ausführung des erfindungsgemäßen Verfahrens geschildert wird. Dabei wird auf die in Figur 1 beschriebenen Komponenten zurückgegriffen, die in Figur 2 zusammenfassend als "Betriebsmittel HW" bezeichnet werden. Diese Betriebsmittel HW verwaltet ein Basis-Betriebssystemmodul BOS, indem es z.B. die Arbeitszeit des Steuermittels CPU aufteilt oder den Speicher MEM in Bereiche gliedert. Das Basis-Betriebssystemmodul BOS ist ein Programmodul aus von dem Steuermittel CPU ausführbaren Befehlssequenzen und ist in dem Speicher MEM gespeichert. Das Basis-Betriebssystemmodul BOS betreibt in dem Beispiel in Figur 2 drei Aufsatzmodule ACE1, ACE2 und ACE3, die jeweils aus einem Aufsatz-Betriebssystemmodul und einem oder mehreren Anwendungsprogrammen bestehen. Das Aufsatzmodul ACE1 enthält ein Aufsatz-Betriebssystemmodul AOS1, das zwei Anwendungsprogramme A11 und A12 betreibt, während ein Aufsatz-Betriebssystemmodul AOS2 in dem Aufsatzmodul ACE2 lediglich ein einzelnes Anwendungsprogramm A21 betreibt. Das Aufsatzmodul ACE3 schließlich weist ein Aufsatz-Betriebssystemmodul AOS3 auf, unter dessen Regie ein Anwendungsprogramm A31, ein Anwendungsprogramm A32 und ein Anwendungsprogramm A33 ausgeführt werden. Es ist auch möglich daß das Basis-Betriebssystemmodul BOS lediglich eines oder zwei der Aufsatzmodule ACE1, ACE2 und ACE3 betreibt oder auch weitere, in Figur 2 nicht dargestellte Aufsatzmodule. Weiterhin können die Aufsatz-Betriebssystemmodule AOS1, AOS2 und AOS3 auch weitere, in Figur 2 nicht dargestellte Anwendungsprogramme betreiben. Die Aufsatz-Betriebssystemmodule AOS1, AOS2 und AOS3 sowie die von ihnen betriebenen Anwendungsprogramme sind jeweils Programmodule aus von dem Steuermittel CPU ausführbaren Befehlssequenzen. Diese Programmodule können z.B. in dem Speicher MEM gespeichert sein oder auch über die Schnittstellenvorrichtung IF empfangen werden. Die Programmodule werden zur jeweiligen Ausführung von dem Steuermittel CPU eingelesen. Damit ist es auch möglich, daß das Basis-Betriebssystemmodul BOS zwei gleichartige Aufsatzmodule betreiben kann, z.B. indem die Programmodule des Aufsatzmodules ACE1 mehrfach gestartet werden.

Da in dem Rechner SER nur das Basis-Betriebssystemmodul BOS direkten Zugriff zu den Betriebsmitteln HW hat, weist das Basis-Betriebssystemmodul BOS den Aufsatz-Betriebssystemmodulen AOS1, AOS2 und AOS3 jeweils Anteile an den Betriebsmitteln HW zu. Dabei teilt das Basis-Betriebssystemmodul BOS z.B. die Betriebszeit des Steuermittels CPU in Bereiche ein, bildet eine sogenannte Zeitscheibe. Abhängig von Zuweisungsregeln, die z.B. in dem Speicher MEM abgelegt sind, weist das Basis-Betriebssystemmodul BOS dann den einzelnen Aufsatz-Betriebssystemmodulen AOS1, AOS2 und AOS3 sowie sich selbst jeweils Anteile an der Zeitscheibe zu, indem es die Aufsatz-Betriebssystemmodule AOS1, AOS2 und AOS3 nach den Vorgaben der Zeitscheibe aufruft oder wieder stillegt. Die Zeitscheibe kann das Basis-Betriebssystemmodul BOS so einteilen, daß die Aufsatz-Betriebssystemmodule AOS1, AOS2 und AOS3 unter "Echtzeit"-Bedingungen arbeiten können, d.h. daß diese Aufsatz-Betriebssystemmodule innerhalb einer garantierten, möglichst kurzen Zeitspanne wieder von dem Basis-Betriebssystemmodul BOS aktiviert werden. Das Basis-Betriebssystemmodul BOS arbeitet dann als ein sogenanntes "Echtzeit-Betriebssystem". Falls ein Aufsatz-Betriebssystemmodul den ihm zugeteilten Anteil an der Zeitscheibe nicht oder nicht vollständig benötigt, kann das jeweilige Aufsatz-Betriebssystemmodul auch bereits vorzeitig seinen Anteil dem Basis-Betriebssystemmodul BOS zu anderweitiger Verwendung zurückgeben. Wenn eines der Aufsatz-Betriebssystemmodule AOS1, AOS2 und AOS3 durch das Basis-Betriebssystemmodul BOS aktiviert wird, wird das Programmodul des jeweiligen Aufsatz-Multitasking-Betriebsystemes zumindest teilweise aus dem Speicher MEM in das Steuermittel CPU geladen und von diesem ausgeführt. Es ist auch möglich, daß das Steuermittel CPU über einen lokalen Speicher, einen sogenannten "Cache"-Speicher verfügt, aus dem das Steuermittel CPU die jeweils auszuführenden Befehlssequenzen schnell und unmittelbar auslesen kann. In ähnlicher Weise, wie anhand der Betriebszeit des Steuermittels CPU dargestellt, kann das Basis-Betriebssystemmodul BOS auch den Zugriff der Aufsatz-Betriebssystemmodule AOS1, AOS2 und AOS3 auf das Anzeigevorrichtung DIS, auf das Tastenfeld KEY und auf die Schnittstellenvorrichtung IF jeweils zeitlich begrenzt erlauben. Es ist jedoch auch möglich, daß z.B. die Anzeigevorrichtung DIS und das Tastenfeld KEY nur von einem der Aufsatzmodule ACE1, ACE2 und ACE3 benutzt werden. Wenn z.B. das Aufsatzmodul ACE1 für den Rechner SER eine Bedienerschnittstellenfunktion wahrnimmt, z.B. in Form einer graphischen Bedienoberfläche, kann z.B. das Anwendungsprogramm A11 Eingaben von dem Tastenfeld KEY empfangen während das Anwendungsprogramm A12 Ausgaben mit Bedienerhinweisen an die Anzeigevorrichtung DIS sendet.

Auch der Speicher MEM wird den Aufsatz-Betriebssystemmodule AOS1, AOS2 und AOS3 von dem Basis-Betriebssystemmodul BOS anteilig zugeordnet. In Figur 1 ist dies verdeutlicht, indem in dem Speicher MEM drei Speicherbereiche AR1, AR2 und AR3 dargestellt sind. Das Basis-Betriebssystemmodul BOS weist z.B. den Speicherbereich AR1 dem Aufsatz-Betriebssystemmodul AOS1 zu, den Speicherbereich AR2 dem Aufsatz-Betriebssystemmodul AOS2 und den Speicherbereich AR3 dem Aufsatz-Betriebssystemmodul AOS3. Weitere Speicherbereiche können z.B. von dem Basis-Betriebssystemmodul BOS selbst belegt werden. Die Speicherbereiche AR1, AR2 und AR3 können den Aufsatz-Betriebssystemmodulen AOS1, AOS2 und AOS3 als sogenannte "virtuelle Speicherbereiche" zugewiesen werden, wobei dann das Basis-Betriebssystemmodul BOS virtuelle Speicheradressen und reale, physikalische Speicheradressen des Speichers MEM wechselseitig aufeinander umsetzt. Die Aufsatz-Betriebssystemmodule AOS1, AOS2 und AOS3 können zwar selbst darauf achten, daß sie selbst sowie auch die von ihnen betriebenen Anwendungsprogramme die Grenzen des ihnen jeweils zugeordneten Speicherbereiches einhalten. Vorteilhafterweise jedoch überwacht das Basis-Betriebssystemmodul BOS den Speicher MEM ständig, um so gegebenenfalls festzustellen, wenn eines der Aufsatz-Betriebssystemmodule AOS1, AOS2 oder AOS3 die Grenzen des ihm jeweils zugewiesenen Speicherbereiches überschreitet oder zu überschreiten droht. In einem solchen Fall kann das Basis-Betriebssystemmodul BOS den Betrieb des jeweils fehlerhaft arbeitenden Aufsatz-Betriebssystemmodules anhalten, um z.B. eine Beeinträchtigung von korrekt arbeitenden Aufsatz-Betriebssystemmodulen oder Anwendungsprogrammen zu verhindern.

Neben der Zuteilung der Betriebsmittel HW zu den einzelnen Aufsatzmodulen ACE1, ACE2 und ACE3 ermöglicht das Basis-Betriebssystemmodul BOS unter anderem auch eine Kommunikation zwischen den Aufsatzmodulen ACE1, ACE2 und ACE3. In einer möglichen Ausführungsform empfängt dabei das Basis-Betriebssystemmodul BOS eine Nachricht von dem Aufsatzmodul ACE1, indem dieses die Nachricht in einen für Nachrichtenaustausch vorgesehenen Bereich des Speichers MEM einschreibt. Das Basis-Betriebssystemmodul BOS ermittelt daraufhin, daß eine Nachricht in den Speicher MEM eingeschrieben worden ist, und sendet dem Aufsatzmodul ACE2 ein Signal, mit dem das Aufsatzmodul ACE2 zum Auslesen des mit der Nachricht beschriebenen Bereiches des Speichers MEM aufgefordert wird.

Die Aufsatz-Betriebssystemmodule AOS1, AOS2 und AOS3 verwalten jeweils die ihnen zugewiesenen Anteile an den Betriebsmitteln HW und steuern die Ausführung der in ihrem Aufsatzmodul jeweils enthaltenen Anwendungsprogramme. Die Funktionsweise der Aufsatz-Betriebssystemmodule AOS1, AOS2 und AOS3 wird im folgenden anhand des Aufsatz-Betriebssystemmodules AOS1 beispielhaft erläutert. Wenn z.B. das Aufsatz-Betriebssystemmodul AOS1 von dem Basis-Betriebssystemmodul BOS aktiviert wird, teilt das Aufsatz-Betriebssystemmodul AOS1 die ihm zur Verfügung stehende Betriebszeit des Steuermittels CPU sich selbst für den eigenen Betrieb sowie den Anwendungsprogrammen A11 und A12 jeweils anteilig zu und läßt das Steuermittel CPU während eines ersten Betriebszeit-Anteiles das Anwendungsprogramm A11, während eines zweiten Betriebszeit-Anteiles das Anwendungsprogramm A12 ausführen. Das Aufsatz-Betriebssystemmodul AOS1 kann wie das Basis-Betriebssystemmodul BOS ebenfalls ein Echtzeit-Betriebssystem sein und dann die Anwendungsprogrammen A11 und A12 jeweils in "Echtzeit", also innerhalb einer garantierten Zeitspanne regelmäßig ausführen. Das Anwendungsprogramm A11 kann z.B. ein Programmodul zur Steuerung von Verbindungen in einer Vermittlungsstelle sein und das Anwendungsprogramm A12 ein Programmodul zur Abrechnung von bei solchen Verbindungen anfallenden Gebühren. Ferner verwaltet das Aufsatz-Betriebssystemmodul AOS1 den Speicherbereich AR1. Dabei weist das Aufsatz-Betriebssystemmodul AOS1 einen Anteil des Speicherbereiches AR1 dem Anwendungsprogramm A11 zu und einen weiteren Anteil des Speicherbereiches AR1 dem Anwendungsprogramm A12. Die Anwendungsprogramme A11 und A12 können dann innerhalb der ihnen zugewiesenen Speicherbereiche für ihren jeweiligen Betrieb erforderliche Daten einspeichern. Auch während des laufenden Betriebes kann ein Anwendungsprogramm, z.B. das Anwendungsprogramm A11 bei dem Aufsatz-Betriebssystemmodul AOS1 erforderlichenfalls Speicherplatz anfordern. Das Aufsatz-Betriebssystemmodul AOS1 erlaubt dann dem Anwendungsprogramm A11, falls möglich, den Zugriff auf weitere Bereiche des Speicherbereiches AR1. Für einen kontrollierten Zugriff der Anwendungsprogramme A11 und A12, der sich auf den jeweils zugewiesenen Anteil an dem Speicherbereich AR1 beschränkt, können die Anwendungsprogramme A11 und A12 selbst sorgen. Vorteilhafterweise überprüft das Aufsatz-Betriebssystemmodul AOS1 jedoch die Zugriffe der Anwendungsprogramme A11 und A12 auf ihren jeweiligen Speicherbereich und verhindert unberechtigte Zugriffe. Das Aufsatz-Betriebssystemmodul AOS1 kann Anteile an dem Speicherbereich AR1 den Anwendungsprogrammen A11 und A12 auch als virtuellen Speicher zuweisen und dabei virtuelle Speicheradressen und aus Sicht des Aufsatz-Betriebssystemmodules AOS1 reale Speicheradressen des Speicherbereiches AR1, die, wie oben dargestellt, ebenfalls durch das Basis-Betriebssystemmodul BOS zugewiesene virtuelle Speicheradressen sein können, wechselseitig aufeinander umsetzen.

Statt in der bekannten Weise nur einzelne Anwendungsprogramme oder Gruppen von Anwendungsprogrammen auf einer Rechnerplattform auszutauschen, können bei dem Rechner SER komplette Aufsatzmodule - auch im laufenden Betrieb - ausgetauscht werden. Dabei werden nicht nur die in einem Aufsatzmodul enthaltenen Anwendungsprogramme, sondern auch das diese betreibende und verwaltende Aufsatz-Betriebssystemmodul ausgewechselt. Ein Online-Austausch von einem Aufsatzmodul gegen ein ersetzendes Aufsatzmodul wird im folgenden anhand der Aufsatzmodule ACE1 und ACE3 dargestellt. Dabei wird zunächst davon ausgegangen, daß das Basis-Betriebssystemmodul BOS nur die Aufsatzmodule ACE1 und ACE2 betreibt. Das Aufsatzmodul ACE3 sei anfangs noch nicht aktiv. Die Programmodule für das Aufsatz-Betriebssystemmodul AOS3 sowie die Anwendungsprogramme A31, A32 und A33 können z.B. über die Schnittstellenvorrichtung IF in den Rechner SER geladen und dann in dem Speicher MEM abgelegt werden. Das Laden und Abspeichern kann das Basis-Betriebssystemmodul BOS oder auch z.B. dasjenige der Aufsatzmodule ausführen, das ersetzt werden soll, im aktuellen Beispiel das Aufsatzmodul ACE1. Danach wird zunächst das neu geladene Programmodul des Aufsatz-Betriebssystemmodules AOS3 von dem Basis-Betriebssystemmodul BOS gestartet. Dabei weist das Basis-Betriebssystemmodul BOS dem Aufsatz-Betriebssystemmodul AOS3 unter anderem den Speicherbereich AR3 zu und reserviert ihm einen Anteil an der Betriebszeit des Steuermittels CPU. Dann wird das Aufsatz-Betriebssystemmodul AOS3 ebenso regelmäßig wie die Aufsatz-Betriebssystemmodule AOS1 und AOS2 von dem Basis-Betriebssystemmodul BOS aufgerufen.

Anschließend werden die Funktionen des Aufsatzmodules ACE1 von dem Aufsatzmodul ACE3 gleitend übernommen. Dazu muß das neue Aufsatzmodul ACE3 zunächst innerhalb des Rechners SER "bekanntgegeben" werden. Das Basis-Betriebssystemmodul BOS informiert also die bereits laufenden Aufsatzmodule ACE1 und ACE2 über das neue Aufsatzmodul ACE3, z.B. mit Hilfe einer Nachricht über die von dem Aufsatzmodul ACE3 benutzen Speicheradressen oder einer Nachricht, in der eine Zieladresse für Nachrichten enthalten ist, über die das Aufsatzmodul ACE3 erreicht werden kann. Weiterhin muß der für den aktuellen Betrieb erforderliche Datenbestand von dem Aufsatzmodul ACE1 an das Aufsatzmodul ACE3 transferiert werden. Beispielsweise kann das Aufsatz-Betriebssystemmodul AOS1 dem Basis-Betriebssystemmodul BOS Daten zum Transferieren vorgeben, die dieses dann aus dem Speicherbereich AR1 in den Speicherbereich AR3 kopiert. Dann kann das Aufsatz-Betriebssystemmodul AOS3 die von ihm betriebenen Anwendungsprogramme A31, A32 und A33 starten. In einer Übergangsphase sendet das Basis-Betriebssystemmodul BOS Nachrichten, die an das Aufsatz-Betriebssystemmodul AOS1 gerichtet sind auch an das Aufsatz-Betriebssystemmodul AOS3, so daß beide Aufsatz-Betriebssystemmodule über dieselben Eingangsinformationen verfügen. Von dem Aufsatz-Betriebssystemmodul AOS3 versendete Nachrichten werden während der Übergangsphase von dem Basis-Betriebssystemmodul BOS abgefangen. Es ist auch möglich, daß das Aufsatz-Betriebssystemmodul AOS3 während der Übergangsphase keine Nachrichten sendet. Sobald das Aufsatzmodul ACE3 vollständig funktionstüchtig, in einer Art "Hot-Standby"-Betrieb ist und dies z.B. dem Basis-Betriebssystemmodul BOS sowie dem zu ersetzenden Aufsatzmodul ACE1 durch eine Nachricht mitteilt, kann das Aufsatzmodul ACE3 die Funktionen des Aufsatzmodules ACE1 vollständig übernehmen. Dann werden z.B. Nachrichten des Aufsatzmodules ACE1 von dem Basis-Betriebssystemmodul BOS abgefangen, während solche von dem Aufsatzmodul ACE3 weitergeleitet werden.

Andere Szenarien eines Funktionsüberganges von dem Aufsatzmodul ACE1 zu dem Aufsatzmodul ACE3 sind ebenfalls möglich, z.B. indem die beiden Aufsatzmodule ACE1 und ACE3 durch wechselseitigen Nachrichtenaustausch ohne steuerndes Mitwirken des Basis-Betriebssystemmodules BOS ihre Daten abgleichen und einen geeigneten Zeitpunkt zum Funktionsübergang ermitteln. In einer weiteren Variante der Erfindung kann auch ein eigens für das Laden, Einspeichern und neu Starten eines neuen Aufsatzmodules vorgesehenes Aufsatzmodul von dem Basis-Betriebssystemmodul BOS betrieben werden, das Aufträge zum Ersetzen eines Aufsatzmodules gegen ein ersetzendes neues Aufsatzmodul im Zusammenwirken mit dem Basis-Betriebssystemmodul BOS ausführt.

Anhand des oben dargestellten Funktionsüberganges der Aufsatzmodule ACE1 und ACE3 werden im folgenden einige Vorteile der Erfindung aufgezeigt. Wie bereits erwähnt kann das Anwendungsprogramm A11 ein Programmodul zur Steuerung von Verbindungen in einer Vermittlungsstelle sein und das Anwendungsprogramm ein Programmodul zur Abrechnung von bei solchen Verbindungen anfallenden Gebühren. Die Funktionen des Anwendungsprogramms A11 kann z.B. das Anwendungsprogramm A31, diejenigen des Anwendungsprogramms A12 das Anwendungsprogramm A32 übernehmen. Durch das Anwendungsprogramm A33 können dann weitere Funktionen, z.B. eine Schnittstellenfunktion zu Einrichtungen eines Intelligenten Netzwerkes in den Rechner SER eingebracht werden. Weil bei dem Austausch jedoch das Aufsatz-Betriebssystemmodul AOS3 neu auf den Rechner SER gebracht wird, können zusätzlich auch neue Betriebssystemfunktionen eingebracht werden. Das Aufsatz-Betriebssystemmodul AOS3 kann z.B. im Vergleich zu dem Aufsatz-Betriebssystemmodul AOS1 neue Funktionen zur sogenannten "Interprozeß-Kommunikation" anbieten. Dann können die Anwendungsprogramme A31, A32 und A33 z.B. mit Hilfe des Aufsatz-Betriebssystemmodules AOS3 längere oder anders aufgebaute Nachrichten untereinander austauschen als es mit Hilfe des Aufsatz-Betriebssystemmodules AOS1 möglich wäre.

Wie oben bereits erwähnt, überwacht ein Aufsatz-Betriebssystemmodul zur Begrenzung der Auswirkung einer Fehlfunktion, ob in einem unter seiner Aufsicht ausgeführten Anwendungsprogramme ein Fehler auftritt. Das Aufsatz-Betriebssystemmodul AOS1 kann z.B. feststellen, ob das Anwendungsprogramm A11 einen ihm nicht zugewiesenen Speicherbereich benutzen will. In diesem Fall beendet das Aufsatz-Betriebssystemmodul AOS1 das Anwendungsprogramm A11, damit das Anwendungsprogramm A11 nicht einen beispielsweise von einem anderen Anwendungsprogramm benötigten Speicher irrtümlich überschreibt. Weiterhin kann das Aufsatz-Betriebssystemmodul AOS1 z.B. durch ein periodisches Polling des Anwendungsprogrammes A11 mit einer Prüfnachricht feststellen, ob das Anwendungsprogramm A11 noch arbeitet. Wenn das Anwendungsprogramm 11 nicht innerhalb einer festgelegten Zeitspanne mit einer korrekten Prüfantwort antwortet, kann das Aufsatz-Betriebssystemmodul AOS1 das Anwendungsprogramm A11 beenden, indem das Anwendungsprogramm A11 z.B. keinen Anteil an der Betriebszeit des Steuermittels CPU bekommt. Nach dem Beenden des Anwendungsprogrammes A11 kann das Aufsatz-Betriebssystemmodul AOS1 ein das Anwendungsprogramm A11 ersetzendes Anwendungsprogramm starten.

Auch das Basis-Betriebssystemmodul BOS überprüft vorteilhaft die korrekte Funktion von unter seiner Verwaltung arbeitenden Aufsatz-Betriebssystemmodulen. Wenn eines der Aufsatz-Betriebssystemmodule AOS1, AOS2 und AOS3 z.B. den ihm zugewiesenen Speicherbereich überschreitet oder eine von dem Basis-Betriebssystemmodul BOS gesendete Prüfnachricht nicht rechtzeitig beantwortet, beendet das Basis-Betriebssystemmodul BOS das jeweilige Aufsatz-Betriebssystemmodul, um Auswirkungen von dessen Fehlfunktion auf noch korrekt arbeitendende Aufsatz-Betriebssystemmodule zu verhindern. Ersatzweise kann das Basis-Betriebssystemmodul BOS dann ein neues Aufsatz-Betriebssystemmodul starten.

Wenn ein Aufsatz-Betriebssystemmodul sowie die von diesem betriebenen Anwendungsprogramme von dem Basis-Betriebssystemmodul BOS beendet worden ist, kann das Basis-Betriebssystemmodul BOS Statusinformationen von dem beendeten Aufsatz-Betriebssystemmodul und dessen Anwendungsprogrammen sichern, um so eine spätere Analyse der Fehlersituation z.B. mit Hilfe eines sogenannten Speicher-"Dumps" zu ermöglichen. Dabei kann das Basis-Betriebssystemmodul BOS z.B. von dem Aufsatz-Betriebssystemmodul vor dem Beenden noch gesendete Nachrichten festhalten oder einen von dem Aufsatz-Betriebssystemmodul benutzten Speicherbereich "einfrieren", also gegen erneuten Zugriff eines neu gestarteten Programmodules sichern. In analoger Weise kann auch ein Aufsatz-Betriebssystemmodul Statusinformationen von eine Anwendungsprogramm sichern, das wegen einer Fehlfunktion beendet worden ist.

Die Aufsatz-Betriebssystemmodule AOS1, AOS2 und AOS3 können jeweils solche Funktionen erbringen, die für die jeweils von ihnen betriebenen Anwendungsprogramme optimal angepaßt sind. Beispiel können die Aufsatz-Betriebssystemmodule AOS1, AOS2 und AOS3 unterschiedliche Mechanismen der Interprozeß-Kommunikation aufweisen oder Mechanismen der Daten-Duplikation, wie sie in ausfallsicheren Systemen gefordert sind. Es kann beispielsweise ein Aufsatzmodul, z.B. das Aufsatzmodul ACE1 in einem "Aktiv-Modus" sein, während ein anderes ein Aufsatzmodul, z.B. das Aufsatzmodul ACE3 in einem "Standby-Modus" läuft. Dann blockiert z.B. das Aufsatz-Betriebssystemmodul AOS3 den Datenfluß aus dem Aufsatzmodul ACE3 heraus, indem es z.B. Nachrichten, die die Anwendungsprogramme A31, A32 oder A33 senden, lediglich innerhalb des Aufsatzmodules ACE3 weiterleitet, nicht jedoch an Ziele außerhalb des Aufsatzmodules ACE3. Wird das Aufsatzmodul ACE3 jedoch in einen Aktiv-Modus geschaltet, leitet das Aufsatz-Betriebssystemmodul AOS3 Nachrichten auch nach außen weiter. Die Anwendungsprogramme A31, A32 oder A33 können dann stets in gleicher Weise arbeiten, müssen sich also nicht durch eigene Routinen an einen Aktiv-Modus oder einen Standby-Modus anpassen. Die "hochwertigen" Betriebssystemfunktionen für einen Aktiv-Modus sowie für einen Standby-Modus sind jedoch, wie oben bereits dargestellt, im Zuge eines Software-Upgrades austauschbar, da sie nicht Teil des Basis-Betriebssystemmodules BOS sind.

Weil die Aufsatz-Betriebssystemmodule AOS1, AOS2 und AOS3 jeweils unterschiedliche Betriebssystemfunktionen erbringen können, können Anwendungsprogramme in jeweils demjenigen Aufsatzmodule ausgeführt werden, dessen Aufsatz-Betriebssystemmodul die für das Anwendungsprogramm erforderlichen Betriebssystemfunktionen anbietet. Außerdem können jeweils solche Anwendungsprogramme in einem Aufsatzmodul zusammengefaßt werden, deren Funktionen sich ergänzen. Es kann z.B. das Aufsatzmodul ACE1 in dem Rechner SER die Funktionen einer sogenannten "Mensch-Maschine-Schnittstelle" erbringen, während das Aufsatzmodul ACE3 Rufsteuerungsfunktionen leistet. Durch die Zusammenfassung funktional zusammenpassender Anwendungsprogramm mit einem geeigneten Aufsatz-Betriebssystemmodul zu einem Aufsatzmodul wird ein hohes Maß an Software-Granularität erreicht, so daß je nach den Möglichkeiten der Betriebsmittel HW unterschiedliche Anzahlen von Aufsatz-Betriebssystemmodulen von dem Basis-Betriebssystemmodul BOS betrieben werden können. Wird z.B. ein neues Steuermittel CPU mit höherer Rechnerleistung in den Rechner SER eingebaut sowie der Speicher MEM z.B. durch weitere Speicherbausteine ergänzt, kann das Basis-Betriebssystemmodul BOS z.B. weitere Aufsatzmodule neben den Aufsatzmodulen ACE1, ACE2 und ACE3 betreiben.

Der Rechner SER kann auch Teil eines Mehrrechersystemes sein, z.B. einer Vermittlungsstelle. Dann ermöglicht das Basis-Betriebssystemmodul BOS auch die Nachrichten-Kommunikation zwischen Aufsatzmodulen, die auf den unterschiedlichen Rechnern des Mehrrechersystemes verteilt sind. Dann sendet und empfängt das Basis-Betriebssystemmodul BOS solche Nachrichten z.B. über die Schnittstellenvorrichtung IF. In einem solchen Mehrrechersystem ist es auch möglich, ein Aufsatzmodul unter Gesichtspunkten einer optimalen Lastverteilung statt von dem Rechner SER von einem vergleichbaren Rechner ausführen zu lassen.

## Patentansprüche

1. Verfahren zum Betreiben eines Rechners (SER) mit während des Betriebes austauschbaren Betriebssystemfunktionen, bei dem ein Basis-Betriebssystem (BOS) Betriebsmittel (HW) des Rechners verwaltet und bei dem zumindest eine (erste) Anwendungsprogrammgruppe (A11, A12) mit mindestens einem Anwendungsprogramm (A11) mit Hilfe der Betriebsmittel des Rechners ausgeführt wird, **dadurch gekennzeichnet, daß** unter der Verwaltung des Basis-Betriebsystemes mindestens ein (erstes) Aufsatz-Multitasking-Betriebsystem (AOS1) arbeitet, das die in der (ersten) Anwendungsprogrammgruppe enthaltenen Anwendungsprogramme betreibt.

2. Verfahren nach Anspruch 1, dadurch gekennzeichnet, daß das Basis-Betriebssystem (BOS) ein zweites Aufsatz-Multitasking-Betriebsystem (AOS3) mit einer zweiten Anwendungsprogrammgruppe (A31, A32, A33) parallel zu dem ersten Aufsatz-Multitasking-Betriebsystem (AOS1) mit der ersten Anwendungsprogrammgruppe (A11, A12) in einer Übergangsphase gemeinsam betreibt, daß das erste Aufsatz-Multitasking-Betriebsystem (AOS1) mit der ersten Anwendungsprogrammgruppe (A11, A12) Funktionen an das zweite Aufsatz-Multitasking-Betriebsystem mit der zweiten Anwendungsprogrammgruppe übergibt, und daß das Basis-Betriebssystem (BOS) das zweite Aufsatz-Multitasking-Betriebsystem nach der Übergabe der Funktionen außer Betrieb nimmt.

3. Verfahren nach Anspruch 1, dadurch gekennzeichnet, daß das Basis-Betriebssystem (BOS) dem Aufsatz-Multitasking-Betriebsystem (AOS1) einen begrenzten Anteil (AR1) an den Betriebsmitteln (HW) des Rechners zuweist und daß das Basis-Betriebssystem überwacht, daß das Aufsatz-Multitasking-Betriebsystem nur auf seinen begrenzten Anteil an den Betriebsmitteln zugreift.

4. Verfahren nach Anspruch 1, dadurch gekennzeichnet, daß das Aufsatz-Multitasking-Betriebsystem (AOS1) die korrekte Funktion der in der Anwendungsprogrammgruppe enthaltenen Anwendungsprogramme (A11, A12) überprüft und daß das Aufsatz-Multitasking-Betriebsystem ein Anwendungsprogramm (A11) beendet, wenn das Aufsatz-Multitasking-Betriebsystem bei der Überprüfung feststellt, daß in dem Anwendungsprogramm eine Fehlfunktion aufgetreten ist.

5. Verfahren nach Anspruch 1, dadurch gekennzeichnet, daß das Basis-Betriebssystem (BOS) die korrekte Funktion des Aufsatz-Multitasking-Betriebsystemes (AOS1) überprüft und daß das Basis-Betriebssystem das Aufsatz-Multitasking-Betriebsystem beendet, wenn das Basis-Betriebssystem bei der Überprüfung feststellt, daß in dem Aufsatz-Multitasking-Betriebsystem eine Fehlfunktion aufgetreten ist.

6. Verfahren nach Anspruch 1, dadurch gekennzeichnet, daß das erste Aufsatz-Multitasking-Betriebsystem (AOS1) für die erste Anwendungsprogrammgruppe (A11, A12) erste Funktionen erbringt, daß unter der Verwaltung des Basis-Betriebsystemes ein zweites Aufsatz-Multitasking-Betriebsystem (AOS3) arbeitet, das in einer zweiten Anwendungsprogrammgruppe enthaltene Anwendungsprogramme (A31, A32, A33) betreibt und daß das zweite Aufsatz-Multitasking-Betriebsystem für die zweite Anwendungsprogrammgruppe zweite Funktionen erbringt.

7. Verfahren nach Anspruch 1, dadurch gekennzeichnet, daß das Basis-Betriebssystem (BOS) ein Echtzeit-Betriebssystem ist.

8. Verfahren nach Anspruch 1, dadurch gekennzeichnet, daß das Aufsatz-Multitasking-Betriebsystem (AOS1) ein Echtzeit-Betriebssystem ist.

9. System aus einem Basis-Betriebssystem (BOS) und mindestens einem Aufsatz-Multitasking-Betriebsystem (AOS1) zum Betreiben eines Rechners mit während des Betriebes austauschbaren Betriebssystemfunktionen, wobei das Basis-Betriebssystem Vewaltungsmittel aufweist, die so ausgestaltet sind, daß das Basis-Betriebssystem die Betriebsmittel (HW) des Rechners verwalten kann, und wobei zumindest eine (erste) Anwendungsprogrammgruppe mit mindestens einem Anwendungsprogramm (A11, A12) mit Hilfe der Betriebsmittel des Rechners ausgeführt wird, **dadurch gekennzeichnet, daß** das Basis-Betriebssystem Ausführungsmittel aufweist, die so ausgestaltet sind, daß unter der Verwaltung des Basis-Betriebsystemes mindestens ein (erstes) Aufsatz-Multitasking-Betriebsystem (AOS1) ausgeführt werden kann, und daß das Aufsatz-Multitasking-Betriebsystem Betriebsmittel aufweist, die so ausgestaltet sind, daß das Aufsatz-Multitasking-Betriebsystem die in der (ersten) Anwendungsprogrammgruppe enthaltenen Anwendungsprogramme (A11, A12) betreiben kann.

10. Rechner (SER), der ein System aus einem Basis-Betriebssystem (BOS) und mindestens einem Aufsatz-Multitasking-Betriebsystem (AOS1) zum Betreiben des Rechners mit während des Betriebes austauschbaren Betriebssystemfunktionen aufweist, wobei das Basis-Betriebssystem Vewaltungsmittel aufweist, die so ausgestaltet sind, daß das Basis-Betriebssystem die Betriebsmittel (HW) des Rechners verwalten kann, und wobei zumindest eine (erste) Anwendungsprogrammgruppe mit mindestens einem Anwendungsprogramm (A11, A12) mit Hilfe der Betriebsmittel des Rechners ausgeführt wird, **dadurch gekennzeichnet, daß** das Basis-Betriebssystem Ausführungsmittel aufweist, die so ausgestaltet sind, daß unter der Verwaltung des Basis-Betriebsystemes mindestens ein (erstes) Aufsatz-Multitasking-Betriebsystem (AOS1) ausgeführt werden kann, und daß das Aufsatz-Multitasking-Betriebsystem Betriebsmittel aufweist, die so ausgestaltet sind, daß das Aufsatz-Multitasking-Betriebsystem die in der (ersten) Anwendungsprogrammgruppe enthaltenen Anwendungsprogramme (A11, A12) betreiben kann.

11. Vermittlungsstelle **dadurch gekennzeichnet, daß** die Vermittlungsstelle mindestens einen Rechner nach Anspruch 10 aufweist.
